# EUROPEAN PATENT APPLICATION

(11) **EP 1 653 754 A2**
(43) Date of publication of application: **03.05.2006**
(21) Application number: 05023269.3
(22) Date of filing: 25.10.2005
(51) Int. Cl.: H04Q 7/32

(54) **Security method and cellular phone with security features**

(30) Priority: 26.10.2004 US 974126
(71) Applicant: Spreadtrum Communications (Shangai) Co., Ltd., Shangai 201203 (CN)
(72) Inventor: Kunyuan, Luo, Shanghai 200122 (CN); Wei, Feng, Pudong New Area Shanghai 200120 (CN); Kai, Liu, Pudong New Area Shanghai 201203 (CN)
(74) Representative: Lang, Johannes

(57) **Abstract**

A system and method for implementing security features in a desktop cellular phone. One or more operating conditions, which may be based on physical location of the phone, on features of a SIM card in the phone, or on any other suitable factors, are defined for the phone. A current status of the phone relative to the one or more operating conditions is then determined, and if the current status of the phone does not satisfy the one or more operating conditions, the phone is prevented, at least in part, from operating.

## Description

### BACKGROUND

Traditional desktop phones may typically be plugged into any conventional phone jack, and operated from that location. Calls placed using such a phone typically incur charges based on the phone line to which the desktop phone is connected via the phone jack. In other words, phone charges are not based on the location of the phone itself, but rather on the phone line to which the phone is connected. Thus, an employer, for example, may provide an employee with a traditional desktop phone in the employee's office, and phone charges incurred by the employee will be based on the phone line connecting into a phone jack in the employee's office. As a result, an employer may easily monitor an employee's calling activity, and may also limit the locations from which an employee may incur phone charges.

With the advent of GSM (Global System for Mobile Communications) desktop cellular phones, a phone user may incur phone charges based on the physical location of the desktop cellular phone, as opposed to the location of a specific phone line. For example, an employee may remove a desktop cellular phone from the employee's office, take the phone to a remote location, and then place or receive calls that will be charged to the employer, based on the location from which the calls are placed or received. In some cases, the GSM phone's SIM (Subscriber Identification Module) card, which allows a user to make and receive calls, dictates that calls placed to and received from locations outside of certain area codes and/or other specified regions are charged at higher rates. Thus, desktop cellular phones are susceptible to abuse to which traditional desktop phones are not subjected.

The SIM card in a typical GSM desktop cellular phone typically includes an international mobile station identifier ("IMSI") for identifying the SIM card. If an existing SIM card in a phone is replaced with a new SIM card, the phone will no longer be identifiable by the original IMSI. As a result, if an employee, for example, steals a desktop cellular phone from an employer, and then changes the SIM card in the phone, the employee will be able to use the phone, which will not be traceable by the employer. Additionally, if an employee removes a SIM card from a desktop cellular phone, and the SIM card is used in another cellular phone, the employer will likely be charged for calls placed with the other phone. Thus, a need exists for a mobile phone having improved security features.

### SUMMARY OF THE INVENTION

The invention is directed to desktop cellular phones having security features, as well as methods for implementing these features. One or more operating conditions, which may be based on a physical location of the phone, on features of the SIM card in the phone, or on any other suitable factors, are defined for the phone. A current status of the phone relative to the one or more operating conditions is then determined, and if the current status of the phone does not satisfy the one or more operating conditions, the phone is prevented, at least in part, from operating.

In one aspect, the operating condition requires that the phone be in communication with a base station included in a predefined selection of at least one base station.

In another aspect, the operating condition requires that the phone be located within an area code included in a predefined selection of at least one area code.

In another aspect, the operating condition requires that the phone be in communication with a network operator included in a predefined selection of at least one network operator.

In another aspect, the operating condition requires that an IMSI of a SIM card presently inserted in the phone be equal to an IMSI previously stored in the phone.

In another aspect, the operating condition requires that an entered PIN be equal to a SIM card PIN stored in the phone.

In another aspect, a method for securing a desktop cellular phone includes defining a set of area codes in which the phone is operable. A current area code in which the phone is located is then determined. Next, it is determined whether the current area code is included in the defined set of area codes. If the current area code is not included in the defined set of area codes, operation of the phone is, at least in part, prevented.

In another aspect, a method for securing a desktop cellular phone includes inserting a designated SIM card into the phone, and storing an IMSI from the designated SIM card in a nonvolatile memory of the phone. When the phone is turned on, the IMSI of the SIM card presently inserted in the phone is determined. The current IMSI is then compared to the IMSI stored in the nonvolatile memory of the phone. If the current IMSI is different from the IMSI stored in the nonvolatile memory of the phone, operation of the phone is, at least in part, prevented.

In another aspect, a PIN from the designated SIM card is stored in the nonvolatile memory of the phone. Before operation of the phone is allowed, the PIN must be entered correctly.

In another aspect, a desktop cellular phone includes means for defining an operating condition for the phone, and means for determining a current status of the phone. The phone further includes means for determining whether the current status of the phone satisfies the operating condition, and means for preventing, at least in part, operation of the phone, if the operating condition is not satisfied by the current status of the phone.

Other features and advantages of the invention will appear hereinafter. The features of the invention described above can be used separately or together, or in various combinations of one or more of them. The invention resides as well in sub-combinations of the features described.

### BRIEF DESCRIPTION OF THE DRAWING

Fig. 1 is a flow diagram illustrating a method of securing a desktop cellular phone according to one preferred embodiment.

Fig. 2 is a flow diagram illustrating a method of securing a desktop cellular phone according to another preferred embodiment.

### DETAILED DESCRIPTION OF THE DRAWINGS

The security methods described herein may be implemented in any cellular telephone, such as a desktop cellular phone, or in any other telephone that includes a processor and nonvolatile memory storage, such as flash memory. Flash memory is a type of electrically erasable programmable read-only memory (EEPROM), in which a section of memory cells can typically be erased in a single action, or in a "flash." Flash memory can be written in blocks, rather than bytes, which makes it relatively easy to update.

A key feature of flash memory is that it retains its data when the device in which it is contained is powered off. Additionally, a flash memory chip, for example, can be electrically erased and reprogrammed without being removed from the circuit board on which it resides. In the desktop cellular phones described herein, nonvolatile memory is preferably embodied in a flash memory card or chip that is insertable into a phone. The nonvolatile memory may alternatively be provided in the phone in or on any other suitable medium.

Desktop cellular phones, such as GSM desktop cellular phones, as well as other cellular phones, due to their mobile nature, are susceptible to several security issues that do not apply to traditional desktop phones. For example, a GSM desktop cellular phone may be removed from its intended location and used to place and receive calls, and incur charges, from an unauthorized location. Additionally, a GSM cellular phone is typically not capable of placing and receiving calls, and performing other operations, without a SIM card. Because the SIM cards inserted into GSM desktop phones are generally removable, and typically reusable in other GSM cellular phones, the potential for improper use of SIM cards is also present.

SIM cards are typically provided by a GSM cellular phone operator. SIM cards are typically available on a subscription basis, where the user is billed at regular intervals, or on a prepaid basis, in which case the user may purchase additional airtime to continue use of a given SIM card. A SIM card typically includes embedded circuitry for storing information about the services available to a user (e.g., caller ID, fax, data, call divert, voicemail, etc.). The SIM card also identifies the user to an operator network, and contains a microprocessor chip, which stores the unique information about the user's account, including the user's phone number. Thus, the user's phone number, as well as any other services associated with the SIM card, changes any time the user replaces an existing SIM card with a new SIM card.

Desktop cellular phones typically include at least one USB (Universal Serial Bus) connector or port for connecting the desktop cellular phone to a computer or other device. A desktop cellular phone may additionally, or alternatively, be connectable to a computer via an infrared device, or another suitable device. The security features described herein are preferably writable into the phone's nonvolatile, or flash, memory, via a computer connected to the desktop phone, or via another suitable means or method. For example, the security features may be programmed via AT (Attention) commands entered via a computer by a user, via "hidden commands" in a software program, via an SMS (Short Messaging Service), via keys on the phone itself, via a voice recognition program, etc.

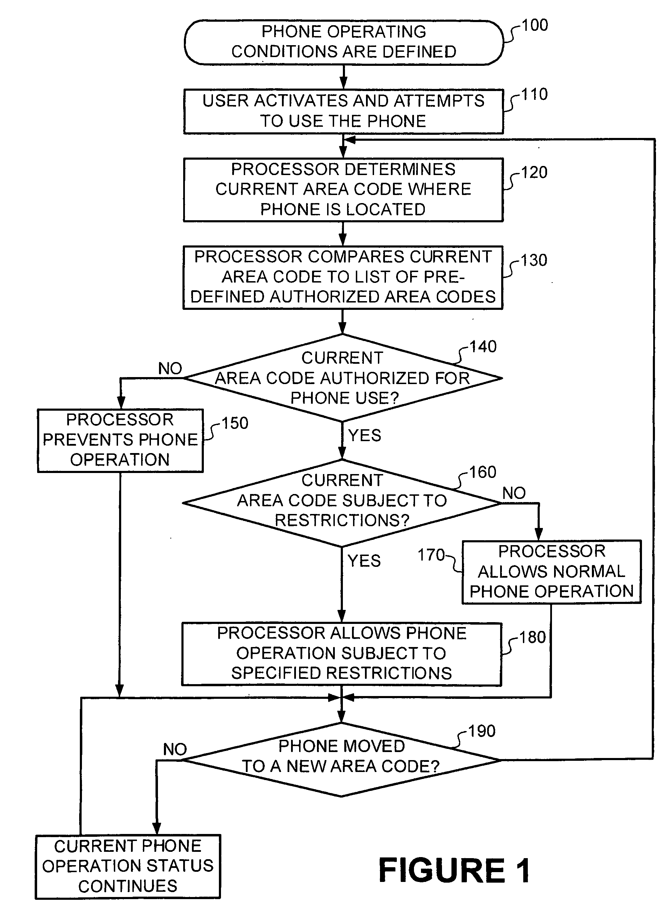

Fig. 1 is a flow diagram illustrating one preferred method of securing a desktop cellular phone, in which geographic location, or physical location relative to an entity, of the phone is used to prevent the phone from operating when it is located in an unauthorized region. At step 100, a manufacturer, designer, programmer, employer, user or other entity defines one or more operating conditions for the desktop cellular phone, limiting operation of the phone to one or more predefined regions or locations.

For example, an employer or other programmer may program the desktop cellular phone to be operable only when it is physically located within one or more specified area codes (area codes are described throughout Fig. 1 by way of example only). Additionally, or alternatively, the phone may be programmed such that it may operate only on a restricted basis in certain area codes. For example, calls may be limited to a specified length of time when the desktop cellular phone is used in a restricted area code. Any other suitable restrictions may also be placed on phone use.

At step 110, a user activates, or otherwise turns on, and attempts to use, the desktop cellular phone. The processor in the phone determines in which area code the phone is currently located, as shown at step 120. The processor then compares the current area code to a list of one or more predefined authorized area codes stored in the phone's nonvolatile memory, or other memory location, as shown at step 130, to determine whether the current area code is authorized for phone use, as shown at step 140.

If the area code is not authorized, the processor prevents, or substantially prevents, operation of the desktop phone, as shown at step 150. In one embodiment, the processor may prevent all operation of the phone, including non-calling functions. In an alternative embodiment, the processor may prevent all calling functions, and/or other charge-incurring functions, but allow one or more non-charge-incurring functions, such as displaying a time and date on a display screen of the phone.

If the current area code is an authorized area code, the processor then determines if the current area code is subject to any restrictions, as shown at step 160. If the current area code is not subject to any restrictions, the processor allows normal operation of the phone, as shown at step 170. If the current area code is a restricted area code, the processor allows operation of the phone subject to the specified restrictions, as shown at step 180.

If restrictions are specified, in a preferred embodiment, the processor displays a message on a display screen of the phone, indicating the one or more restrictions to which the phone is subjected while present in the current area code. Alternatively, the processor may send a voice message to the user identifying the restrictions, or the restrictions may be indicated to the user in any other suitable manner, or not at all.

The processor in the desktop cellular phone preferably continually monitors the physical location of the phone. When the phone moves from one area code to another, the processor recognizes the change, as shown at step 190, and returns to step 120 to repeat the above process, to ensure that the new area code is authorized for phone use. If the new area code is authorized, normal operation of the phone is continued. If the new area code is not authorized, or if the new area code is authorized but restricted, operation of the phone is restricted as described above.

In another embodiment, a similar security process may be followed based on cell identifiers (Cl), or base stations, with which the desktop cellular phone communicates. A typical area code includes a large number of Cls. Thus, this method may be used to more narrowly limit the regions in which the phone is authorized for use, as compared to the area code authorization method. For example, a predefined list of one or more Cls with which the desktop cellular phone is authorized to communicate may be stored in the nonvolatile memory, or other memory location, of the phone. Whenever the phone is turned on, or when the phone moves from one Cl to another, the processor in the phone performs the steps as described above for the area code authorization method to determine whether the phone is authorized for use while communicating with the current Cl. Also, as described above, restrictions may apply to one or more of the predefined Cls.

In another embodiment, a similar security process may be followed based on mobile network operators that facilitate and process mobile phone calls. For example, a predefined list of one or more mobile network operators, via which the desktop cellular phone may place and receive calls, may be stored in the nonvolatile memory, or other memory location, of the phone. Whenever the phone is turned on, or when phone communication transfers from one mobile operator network to another, the processor in the phone performs the steps as described above for the area code authorization method to determine whether the phone is authorized to place and receive calls via the current mobile network operator with which the phone is communicating. In one embodiment, the phone may be limited to operating with only one network, so that roaming charges are completely avoided. Additionally, restrictions may apply to one or more of the predefined mobile network operators.

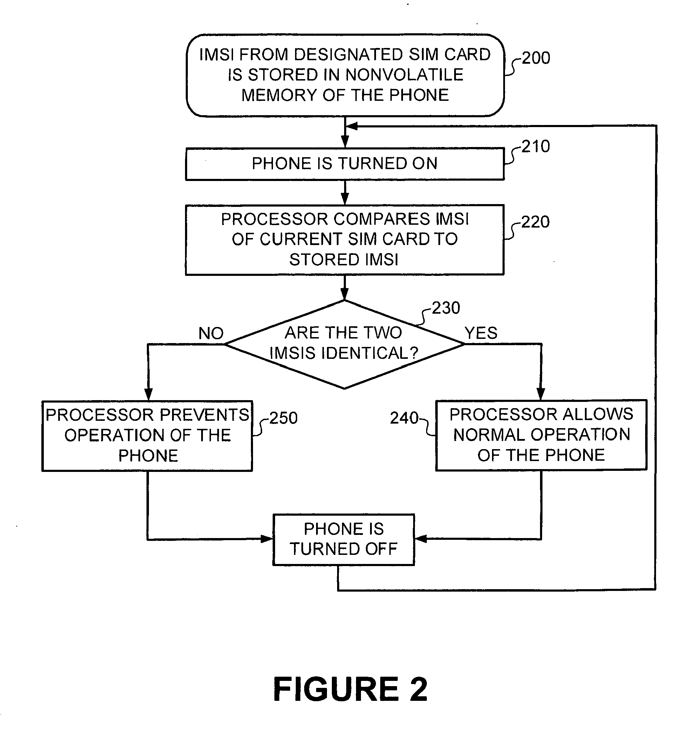

Fig. 2 is a flow diagram illustrating another preferred method of securing a desktop cellular phone, in which features of the SIM card in the phone are used for securing the phone. In this embodiment, the desktop cellular phone is restricted to being used with only one SIM card. Accordingly, if the phone is stolen, for example, and a new SIM card is inserted into the phone, the phone will not be able to place or receive calls, or perform any of the other functions provided by the SIM card. Thus, any incentive to steal the phone is greatly reduced. Additionally, if an employee, for example, attempts to use the phone, by inserting a different SIM card into the phone, for placing unauthorized personal calls, the phone will not operate with the new SIM card.

In this embodiment, the IMSI of the SIM card designated for use in the desktop cellular phone is stored in the nonvolatile memory, or other memory location, of the phone, as shown at step 200. Each time that the phone is turned on, as shown at step 210, the processor in the phone compares the IMSI of the SIM card presently inserted in the phone, with the IMSI stored in the phone's nonvolatile memory, as shown at step 220. If, at step 230, the processor determines that the two IMSIs are identical, i.e., that the designated SIM card remains in the phone, the processor allows normal operation of the phone, as shown at step 240. If, conversely, the processor determines, at step 230, that the two IMSIs are not identical, the processor prevents operation of the phone, at least in part, as shown at step 250.

In one embodiment, the processor may prevent all operation of the phone, including non-calling functions, if the two IMSIs are not identical. In an alternative embodiment, the processor may prevent all calling functions, and/or other charge-incurring functions, but allow one or more non-charge-incurring functions, such as displaying a time and date on a display screen of the phone.

In another embodiment, a SIM card also includes a PIN (Personal Identification Number) for enabling a password protection feature in the desktop cellular phone. In this embodiment, after a SIM card is inserted into the phone, a predefined PIN, or a user-defined PIN, must be entered, preferably each time that the phone is turned on, before the phone becomes operable. In a preferred embodiment, the SIM card includes a predefined PIN that must be entered the first time the phone is turned on, after insertion of the SIM card, to gain access to the features of the phone. Once the predefined PIN has been entered, the user is preferably given the option to change the PIN.

In one embodiment, if incorrect PINs are consecutively entered a specified number of times, the phone shuts down and does not allow further entering of PINs by the user. In such a case, the desktop cellular phone is prevented, at least in part, from operating with the current SIM card, until authorization is obtained from a developer, manufacturer, programmer, designer, employer, or other specified entity with security override authority.

In another embodiment, the IMSI comparison method illustrated in Fig. 2 may be used in conjunction with the SIM card PIN verification method just described to add an additional layer of security to the desktop cellular phone. In such a case, the phone is operable only if the designated SIM card is presently inserted in the phone, and if the proper PIN is entered, when the phone is turned on. This added layer of security prevents an employee, for example, from using a co-worker's phone, having a designated SIM card inserted therein, to place unauthorized phone calls when the co-worker is absent (unless the employee enters the correct PIN).

While embodiments and applications of the present invention have been shown and described, it will be apparent to one skilled in the art that other modifications are possible without departing from the inventive concepts herein. Importantly, many of the steps detailed above may be performed in a different order than that which is described. Additionally, two or more of the above-described security features may be used in conjunction with one another. The invention, therefore, is not to be restricted except by the following claims and their equivalents.

## Claims

1. A method for securing a cellular phone, comprising the steps of:
defining an operating condition for the phone;
determining a current status of the phone;
determining whether the current status of the phone satisfies the operating condition; and
preventing, at least in part, operation of the phone, if the operating condition is not satisfied by the current status of the phone.

2. The method of claim 1 wherein the operating condition requires that the phone be in communication with a base station included in a predefined selection of at least one base station.

3. The method of claim 1 wherein the operating condition requires that the phone be located within an area code included in a predefined selection of at least one area code.

4. The method of claim 1 wherein the operating condition requires that the phone be in communication with a network operator included in a predefined selection of at least one network operator.

5. The method of claim 1 wherein the operating condition requires that an IMSI of a SIM card presently inserted in the phone be equal to an IMSI previously stored in the phone.

6. The method of claim 1 wherein the operating condition requires that an entered PIN be equal to a SIM card PIN stored in the phone.

7. The method of claim 6 wherein the step of determining a current status of the phone comprises reading a currently entered PIN.

8. The method of claim 1 wherein the determining steps are performed each time that the phone is turned on.

9. The method of claim 1 wherein the operating condition is stored in a nonvolatile memory of the phone.

10. The method of claim 9 wherein the nonvolatile memory is embodied on a flash memory chip in the phone.

11. The method of claim 1 wherein operation of the phone is completely prevented if the operating condition is not satisfied by the current status of the phone.

12. The method of claim 1 wherein operation of the phone is partially prevented, as defined by at least one restriction, if the current status of the phone is defined as subject to the at least one restriction.

13. A method for securing a cellular phone, comprising the steps of:
defining a set of area codes in which the phone is operable;
determining a current area code in which the phone is located;
determining whether the current area code is included in the defined set of area codes; and
preventing, at least in part, operation of the phone, if the current area code is not included in the defined set of area codes.

14. The method of claim 13 wherein the determining steps are performed each time that the phone is turned on.

15. The method of claim 13 wherein the determining steps are performed each time that the phone moves from one area code to another area code.

16. The method of claim 13 wherein operation of the phone is completely prevented if the current area code is not included in the defined set of area codes.

17. The method of claim 13 wherein operation of the phone is partially prevented, as defined by at least one restriction, if the current area code is defined as subject to the at least one restriction.

18. A method for securing a cellular phone, comprising the steps of:
inserting a designated SIM card into the phone;
storing an IMSI from the designated SIM card in a nonvolatile memory of the phone;
determining, when the phone is turned on, a current IMSI of a SIM card presently inserted in the phone;
comparing the current IMSI to the IMSI stored in the nonvolatile memory of the phone; and
preventing, at least in part, operation of the phone, if the current IMSI is different from the IMSI stored in the nonvolatile memory of the phone.

19. The method of claim 18 further comprising the steps of:
storing a PIN from the designated SIM card in the nonvolatile memory of the phone; and
requiring that the PIN be correctly entered before allowing operation of the phone.

20. A cellular phone, comprising:
means for defining an operating condition for the phone;
means for determining a current status of the phone;
means for determining whether the current status of the phone satisfies the operating condition; and
means for preventing, at least in part, operation of the phone, if the operating condition is not satisfied by the current status of the phone.
